Europäisches Patentamt

European Patent Office

Office européen des brevets

(11) Publication number: **0 113 341**
**B1**

(12) **EUROPEAN PATENT SPECIFICATION**

(45) Date of publication of patent specification: **08.07.87**

(21) Application number: **82902503.0**

(22) Date of filing: **12.07.82**

(86) International application number:
**PCT/US82/00924**

(87) International publication number:
**WO 84/00450 02.02.84 Gazette 84/03**

(51) Int. Cl.⁴: **H 02 P 1/04, A 47 L 1/02, B 60 S 1/08**

(54) WINDSHIELD WIPER CONTROL SYSTEM.

(43) Date of publication of application:
**18.07.84 Bulletin 84/29**

(45) Publication of the grant of the patent:
**08.07.87 Bulletin 87/28**

(84) Designated Contracting States:
**DE FR GB SE**

(56) References cited:
**DE-A-2 504 799**
**US-A-3 458 889**
**US-A-3 483 459**
**US-A-3 582 732**
**US-A-3 643 145**
**US-A-3 649 898**
**US-A-3 657 626**
**US-A-3 774 091**
**US-A-3 849 711**
**US-A-4 339 698**

(73) Proprietor: **KEARNS, Robert W.**
**9725 Lookout Place**
**Gaithersburg MD 20760 (US)**
(73) Proprietor: **KEARNS, Timothy B.**
**9725 Lookout Place**
**Gaithersburg MD 20760 (US)**

(72) Inventor: **KEARNS, Robert W.**
**9725 Lookout Place**
**Gaithersburg MD 20760 (US)**
Inventor: **KEARNS, Timothy B.**
**9725 Lookout Place**
**Gaithersburg MD 20760 (US)**

(74) Representative: **Reichel, Wolfgang, Dipl.-Ing.**
**Reichel und Reichel Parkstrasse 13**
**D-6000 Frankfurt am Main 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a windshield wiper control system and especially to an inermittent windshield wiper system comprising the features of the precharacterizing portion of claim 1.

An intermittent windshield wiper system showing the features of the precharacterizing portion of claim 1 is already known from the US—A—3 374 091 describing a system with an improved electrodynamic braking. This system comprises a motor driving the windshield wiper through repeating wiping cycles with a start and an end and driving switch means which have a RUN position and a DWELL position. An amplifying device being responsive to the potential on one side of a storage device is caused, by means of the charging and discharging of this storage device, to successively initiate dwell periods and wiping cycles. The speed of the motor which is a three-brush motor is always at the full speed capability of the motor and the third brush of this motor is used for controlling the end of a braking period initiated by braking means. These braking means include a current path connected across the armature of the motor, which is automatically opened whenever the motor is not rotating. During the brake actuation the brake is removed at the end of the braking action so that at the end of the dwell period the available power is used for starting current to the motor.

Although this system provides an improved braking within a small region, it is disadvantageous that the system works regardless of the degree of wetness on the windshield so that the driver's stress is increased when conditions of road or weather change abruptly. Furthermore, the speed torque characteristics of the motor are unsatisfactory because of lack of a speed contol.

A moisture sensitive system has been proposed in the DE—A—2 504 799 which varies the dwell time in accordance with the friction resistance of the wiper on the surface to be cleaned, whereby the friction resistance is indirecty determined by means of a moisture sensor or by detecting the load on the motor. This indirect method utilizes a resistor connected in series with the armature of the motor, which unnecessarily slows the motor speed as the number of raindrops to be cleaned diminishes. Moreover, this resistor reduces the maximum torque output capability of any motor this system is used with.

Further, it is known from the US—A—3 483 459 to control the motor speed during the downstrokes of the wiping cycles. The speed is regulated by pulsing an on-off circuit and changing the percentage of ON time in accordance with increase or decrease of the load on the motor. The speed of the motor is pulsed by a square wave ON-OFF signal generated by an oscillator sensitive to the angular position of the motor, wherein the OFF-Time is controlled independently of the position of the motor. For generation of these oscillations and for controlling the frequency of these oscillations, a printed circuit board is employed resulting in a disadvantageous modification of the motor.

It is the object of the invention to provide a novel and useful windshield wiper system which leads to a reduction of the number of wet accidents and provides a motor speed control applicable to various systems without any extensive modifications.

This object is solved by the characterizing features of claim 1.

According to claim 1 the motor speed is maintained substantially uniform for different conditions such as different degrees of dryness of the windshield and condition of the wipers. The speed is regulated with a continuous current, or more specifically, the speed of the motor is regulated in a closed loop control system applying a feed back signal responsive to the motor speed to the input of the amplifying device. Thus motor performance is enhanced by improving its speed torque characteristics by means of the feed back control. This speed control starts immediately, when turned on, without an inadvertent delay of the wiper operation occurring.

The inventive system is moisture sensitive and does not need any moisture sensor because the resistance of the wiper blades on the windshield directly determines the dwell period. Further, a good repeatable moisture sensitivity is achieved by the uniform motor speed at the entrance of the dwell region so that the resistance of the windshield to the wiper blades, dependent on the wetness, preceisely determines the transition point at which the system automatically skips the dwell period and the motor rotates continuously, even though the charge storing device is charging and discharging, so that the wiping rate is increased to the high speed low torque capability of today's three brush DC motors.

The inventive feed back control can be implemented by a variety of circuits with different degrees of simplicity but which all do not need a modification of the respective motor. The inventional control device can be manufactured with solidstate integrated circuit technology which is implemented by only a single capacitor. Since the cost of the labor to insert a capacitor exceeds the cost of the capacitor itself, this feature achieves a worthwhile design objective. A single variable resistance control can adjust the wiper operation over a continuous range from maximum dwell to zero dwell. Thus the inventive system can easily provide a uniform system energy and moreover different frictional trajectory patterns offered by different shapes of surfaces to be cleaned can easily be taken into account, because only the feed back path to the amplifying device has to be varied for changing the above transition point. In other words, the inventional system offers uniform energy as well as an adjustable system energy and also a good life expectancy due to the degree of simplicity. Due to the feed back circuitry it is possible to achieve with a single potentiometer wiper compensation for variations in supply voltage, speedtorque characteristic variations, component tolerances and friction in the linkages. In other words, a single instrument panel knob serves for adjusting the system to the optimum operation point.

The moisture sensitive system of claim 1 is advantageously developed in subclaims 2 to 25 which are, for example, directed to adjustable means for adjusting the above transition point, to systems provided with a pump motor and with braking control means in connection with a manual on-off control means, and to the motor speed regulating device.

A preferred embodiment of the motor speed regulating device is a circuit in which the speed of a threebrush motor is regulated under varying load conditions in accordance with signals derived from two different brushes of this motor and applied to the input of the amplifying device. Further, a modified motor speed regulating device of a threebrush DC motor is provided wherein a coarse operating motor current is established through the use of the one gate of the field effect transistor (FET) and fine variations in that coarse currents are established automatically through the use of a second gate on the FET.

Further, the mentioned system is modified to provide a control device which minimizes variation in the position of the wiper during successive pauses by utilizing a solidstate switch as a controlled brake and to use this same solidstate switch to conduct reverse current through the motor when the wiper motor is turned off.

A modified system is provided which features depressed and/or off the glass park location of the wiper blades so as not to obstruct the vision of the driver or to interfere with the stream lines of the vehicle when the wiper operation is not required and, further, to drive the wipers to this location at low speed with the full torque capability of the motor while driving the motor in the reverse direction to utilize the mechanical mechanism developed for this purpose.

Further, this park feature is achieved without instantaneously reversing the motor rotation when the instrument panel control is placed in the off position leaving a wet streak on the glass which obscures visability. In accordance with the invention, after the control is placed in the off position, the wipers continue forward wiping the glass clean in the wipe cycle then in progress and upon reaching the on the glass pause position, the motor is reversed and the wipers move to the depressed or off the glass location by means of a single motor driven switch. This achievement further increases safety and reduces cost which is highly important in high volume products.

The above functions are solved with a minimum of compatible components to incorporate the above features with the wipe after wash prior development of the applicant.

Further, the motor is deenergized abruptly at the start of a dwell period and is energized gradually to provide a "soft" start at the end of the dwell period.

Further, there is provided a system which features an "instant start" upon being energized regardless of the condition of the capacitive component of an RC timing circuit, which object is achieved by open circuiting the capacitor until the intermittent dwell position is traversed during the initial cycle of operation.

Various embodiments of the present invention will be explained in the following description with the accompanying drawings, wherein:

Brief description of the drawings

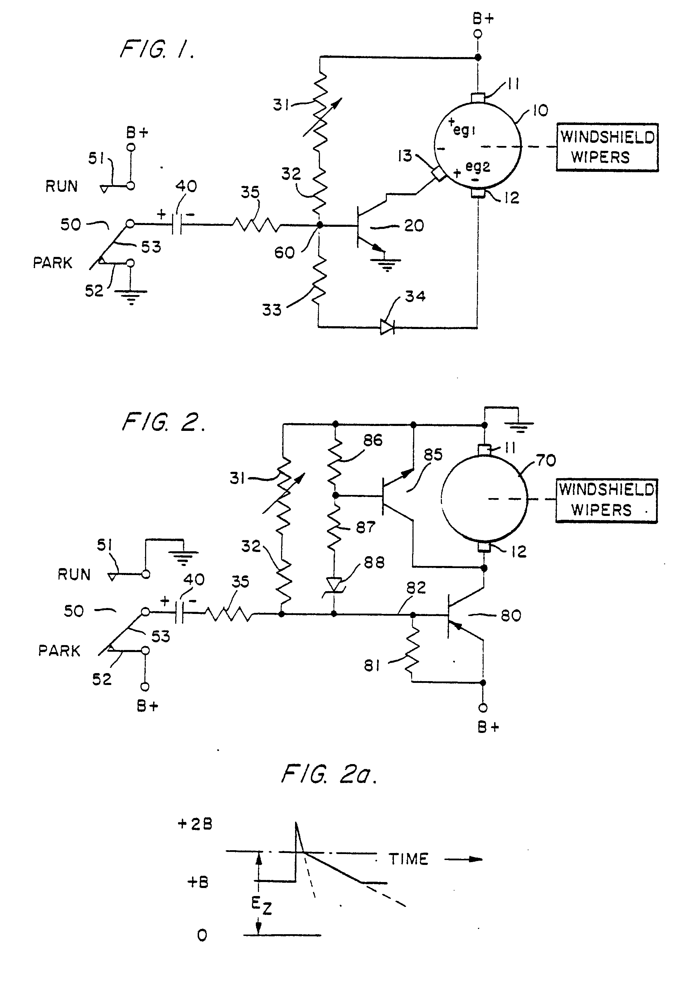

Fig. 1 is a schematic drawing of one embodiment of the invention featuring a method of generating a speed signal within the threebrush DC motor to achieve a signal of the correct polarity whose magnitude is proportional to motor rotating speed and used so as to provide an intermittent dwell time adjustment and variable wipe speed. A higher wipe speed corresponding to a shorter dwell time is provided until the dwell time continuously shortens to zero and, upon further adjustment, continuously increases the wiping speed without dwell periods to the maximum capability of motor speed. The single capacitor serves as a system noise filter during wiping, as well;

Fig. 2 is a schematic of an embodiment of the invention employing a solidstate brake applied to a two brush motor and with only a single capacitor;

Fig. 2a is a voltage time graph of base voltage on the transistor 80 in the circuit of Fig. 2 showing that the brake utilizes and amplifies current previously stored in the capacitor for a short period at the beginning of the dwell time and the remaining charge is neutralized at a slower rate from a predetermined potential to provide control of the dwell time;

Fig. 3 is a schematic diagram showing a modification of the device of Fig. 1, in which a solidstate brake is used;

Fig. 4 is a schematic drawing of a modification of the device of Fig. 3, with the additional feature of no-streak off the glass depressed park achieved with a single motor driven park switch;

Fig. 5 is a schematic drawing of an embodiment of the invention which features instant start and wipe after wash in addition to the features of Fig. 4;

Fig. 6a is a schematic drawing of the output gear of a motor, which may be employed in the embodiments of Figs. 4 or 5 showing a printed circuit variable resistance provided for moisture sensitivity and a camming arrangement to control the position of the contacts of the motor-driven switch;

Fig. 6b is a circuit diagram showing how the printed circuit resistance of Fig. 6a is connected to the circuits of Figs. 3 or 4;

Figs. 7a, 7b and 7c are circuit diagrams showing different embodiments of the motor speed regulator of the present invention. Fig. 7a utilizes a transistor to regulate the motor winding current. Fig. 7b utilizes a MOSFET type transistor to regulate the motor winding current. Fig. 7c achieves smoother operation of the circuit of Fig. 7b by including a signal filter;

Fig. 8 is a circuit diagram of an intermittent motor control system in accordance with the present invention utilizing the speed regulation of Fig. 7 and achieving a "soft" start after a dwell time occurs;

Fig. 8a shows voltage time waveforms generated in the circuit of Fig. 8; and

Fig. 9 shows a circuit diagram of an embodiment of the invention derived to achieve many of the features of the other disclosed embodiments in a single control.

Description of a preferred embodiment

In the intermittent windshield system shown in Fig. 1, the reference number 10 designates a DC permanent magnet three brush motor connected to drive the windshield wipers on an automotive vehicle through repeating wiping cycles. The motor 1 has a pair of brushes 11 and 12 on opposite sides of the armature and a third brush 13. If the motor 10 were energized between the brushes 11 and 12, it would run at a slower speed than when energized between the brushes 11 and 13. As shown in Fig. 1, the brush 11 is connected to the positive side of the power supply B+. The high speed brush 13 is connected to the collector of a transistor, the emitter of which is grounded. The base of the transistor 20 is connected through a fixed resistor 32 and a variable resistor 31 to the brush 11 and also through a resistor 33 and a diode 34 to the brush 12. As the motor drives the windshield wipers of the automative vehicle, it also operates a motor driven switch 50. During each wipe cycle, the pole 53 of the motor driven switch 50 will engage the contact 51 which is connected to the positive side of the power supply B+. Each time the motor comes to the end of the wipe cycle with the wiper blades in the "dwell position", the pole of the switch 53 disengages from the contact 51 and engages the contact 52 which is connected to ground. The pole of the switch 53 is connected through the series circuit of a capacitor 40 and a resistor 35 to the base of the transistor 20.

In operation, the circuit shown in Fig. 1 will energize the motor 10 to drive the windshield wipers intermittently stopping for a dwell period at the end of each wipe cycle. At the end of each wipe cycle, the pole 53 of the switch 50 will disengage from the run contact 51 and engage the park contact 52 whereupon the motor 10 will be deenergized and stopped. After a dwell period, the circuit will reenergize the motor 10 to drive the windshield wipers through another wipe cycle. When the wiper blades reach the end of the wipe cycle and the pole 53 disengages from the contact 51 and engages the contact 52, the pole 53 will remain engaged with the contact 52 through a predetermined angle of rotation of the motor 10. This angle of rotation of the motor 10 in which the pole 53 engages the contact 52 is called the $\theta$ region.

In the circuit of Fig. 1, the motor 10 is energized between brushes 11 and 13. The voltage between brushes 11—13 determines the speed of the motor by the equation:

$$E_{11-13}=ir+K\dot{\theta}$$

in which $E_{11-13}$ is the voltage between brushes 11—13, i is the current through the armature, r is the resistance of the armature, and $\dot{\theta}$ is the speed of rotation of the motor. As the transistor 20 becomes more conductive, $E_{11-13}$ increases and the motor runs faster, for the same torque load.

$$K\dot{\theta}=e_{g_1}$$

where $e_{g_1}$ is the back emf generated by the rotation of the armature. Since the windings associated with the armature angle between brushes 13 and 12 are also turning in the presence of the magnetic field, a voltage $e_{g_2}$ is generated by the motor generator configuration between brushes 12 and 13. Thus, brush 12 will be at a lower potential than brush 13 when the armature is rotating. When the transistor 20 is fully conducting the saturation voltage between the collector and emitter of the transistor, $V_{CE(sat)}$, will be quite small and brush 13 will be near ground potential. Under these conditions, the generated voltage at brush 12 will be negative with respect to ground. This negative potential draws current from summing junction 60 tending to reduce the potential at junction 60 and reduce the conductivity of transistor 20. Current enters the summing junction 60 through variable resistance 31 and resistor 32. When the motor-driven switch 50 has its pole 53 in contact with the RUN contact 51, charging current flows through capacitor 40 and resistance 35. The windshield wiper system shown in Fig. 1 is moisture sensitive in that when it is raining sufficiently hard, the system of Fig. 1 will not stop for a dwell period, but will skip the dwell period by the motor coasting through the $\theta$ region without stopping. The tendency of the wiper blades to coast through the $\theta$ region is dependent upon the resistance of the windshield to the wiper blades which, in turn, is determined by the wetness of the windshield. Thus, in periods of heavy rain, the system of Fig. 1 will automatically skip the dwell period at the end of each wipe cycle and, thus, is moisture sensitive. On the upstroke of the wipers from the park position, when accumulated moisture is being wiped away, the capacitor 40 does most of its charging, the transistor tends to be more conducting, and the motor runs faster than during the downstroke toward the dwell position. During the downstroke, the almost fully charged capacitor 40 provides only a little current to the summing junction 60 and the speed of the motor is determined by the ratio of variable resistance 31 plus resistor 32 to the value of the resistance 33. During the end of the downstroke and as the blades approach the $\theta$ region, this is even more true. Thus, the circuit achieves the uniform motor speed entering the θ region needed for good repeatable moisture sensitivity.

As the value of resistance 31 is made smaller, more current flows into the sum summing junction from this path and the speed into the θ region is increased. By adjusting the value of the resistor, the point at which the system skips the dwell period can be ajusted. Kinetic energy changes with the square of the speed so large manufacturing variations and changes in rubber hardness and friction properties can be compensated for with only a modest change in detectable wiper speed.

When the motor-driven park switch 50 reaches the dwell position, the positive plate of capacitor 40 changes potential abruptly from B+ to ground. Since a capacitor cannot change its charge instantaneously, the negative plate of capacitor 40 also decreases its potential by B+ volts to about −B potential. The summing junction potential at 60 goes negative, turning off the transistor 20 and brushes 13 and 12 rise in potential as the wiper blades slide on the glass using up the kinetic energy. Diode 34 blocks any current from brush 12 from neutralizing the charge on the capacitor 40. If the wiper blades stop for the dwell period, the charge on capacitor 40 is neutralized only by current through resistances 31 plus 32 during the dwell period. As the summing junction potential becomes sufficiently positive, transistor 20 becomes conducting and the motor starts to turn if the torque load is light. Upon exiting the θ region, the pole of motor-driven park switch contacts contact 51 and capacitor 40 begins to recharge and the cycle repeats.

Resistor 35 is of a sufficiently larger resistance value than resistor 32 so that when the variable resistance 31 is zero, the summing junction remains sufficiently positive throughout the θ region that the transistor remains conducting continuously and the motor rotates continuously even though the capacitor 40 is charging and discharging each cycle. The transition point at which the system changes from an intermittent operation to continuous operation is with the value of the resistor 31 at about 30 percent of the value of the resistor 32 and the sum of the values of the resistances 31 and 32 will be less than the value of the resistor 35. (The transition point varies with the amount of moisture on the windshield and is the point at which mmoisture sensitivity occurs). Ideally, this transition point corresponds with the low speed characteristic of the motor. As resistor 31 is further reduced below the transition point, the potential at brush 12 goes further negative and the motor runs faster. When the collector voltage is driven to $V_{CE(sat)}$, the motor runs at full speed.

Thus, a single variable resistance control adjusts the wiper operation over a continuous range from maximum dwell to zero dwell at gradually increasing wiper speed and then continuously through continuous low speed through continuous high speed.

The system of Fig. 2 is a modification of that shown in Fig. 1 employing a two brush permanent magnet motor 70 and employing electrodynamic braking to stop the motor in the θ region. As in the system of Fig. 1, the motor 70 drives the windshield wipers and drives the motor operated switch 50, the pole 53 of which engages the run contact 51 when the motor is driving the wiper blades through a wipe cycle, and engages the park contact 52 when the wiper blades are in the θ region. The motor 70 has a brush 11 connected to ground and a brush 12 connected to the collector of a PNP transistor 80, the emitter of which is connected to B+. The base of the transistor 80 is also connected to B+ through a resistor 81 and through the series circuit of the resistor 35 and the capacitor 40 to the pole 53 of the motor driven switch 50. The base of the transistor 80 is connected through the series circuit of the potentiometer 31 and the resistor 32 to the brush 11 of the motor 70. A second transistor 85 has its emitter connected to the brush 11 and its collector connected to the brush 12. A series circuit of resistors 86, 87 and a Zener diode 88 is connected from the brush 11 to the base of the transistor 80. The junction between the resistors 86 and 87 is connected to the base of the transistor 85. In the circuit of Fig. 2, the components which correspond to those in Fig. 1 have been given the same reference numbers.

In the circuit of Fig. 2, the motor 70 is energized between brushes 11 and 12. When the transistor 80 is fully conducting $V_{CE(sat)}$, it is quite small and brush 12 is near B+ potential. Transistor 80 is fully conducting when its base voltage at junction 82 is sufficiently negative. Base current flows from junction 82 through resistances 32 and 31 to ground and charging current flowing through resistance 35 and capacitor 40 to ground when the pole 53 of the motor driven park switch 50 engages contact 51. The Zener breakdown voltage of diode 88 is selected to exceed B+ so that no current flows through resistance 87 at this time. When the pole 53 engages the contact 52, the negative plate of the capacitor rises in potential by B+ volts. Since the charge in a capacitor cannot change instantaneously, the potential of the positive plate rises a like amount to nearly +2B potential exceeding the Zener breakdown voltage. Neutralizing current for the capacitor 40 will then flow through resistance 87 causing transistor 85 to become conductive braking the motor. The nearly +2B potential on the base of transistor 80 will also cause the transistor 80 to be nonconductive deenergizing the motor. With two paths for neutralizing current to flow from the capacitor 40, the exponential decaying curve first occurs with a short time constant until the Zener breakdown point is no longer exceeded whereupon the time constant of the dwell time depends upon the value of resistance 32 and 31 as well as resistance 35. Fig. 2b shows the voltage waveform produced at the junction 82. When the nearly +2B potential at junction 82 decays to less than +B potential, transistor 80 again becomes conductive and the cycle repeats. At the time the junction 82 potential is less than the Zener breakdown potential, the braking transistor 85 is nonconducting, and when the junction 82 potential is less than the Zener breakdown potential and +B, both transistors 85 and 80 are nonconducting. Thus, when transistor 80 again becomes conducting, transistor 85 has previously become nonconducting and the current from transistor 80 energizes the motor 70 efficiently.

Resistor 35 is of a sufficiently larger resistance value than resistor 32 so that when the variable resistance 31 is zero, the junction 82 remains sufficiently less than +B throughout the θ region that the transistor 80 remains conducting continuously, the motor is energized continuously, and diode 88 remains nonconducting even through the capacitor 40 is charging and discharging each cycle.

Thus, the device of Fig. 2 exhibits intermittent operation with a maximum dwell period when resistance 31 is a maximum and the dwell period is reduced continuously as the value of resistance 31 is reduced. When resistance 31 approaches zero, the dwell periods become truly zero, the braking action is also zero and the motor runs continuously.

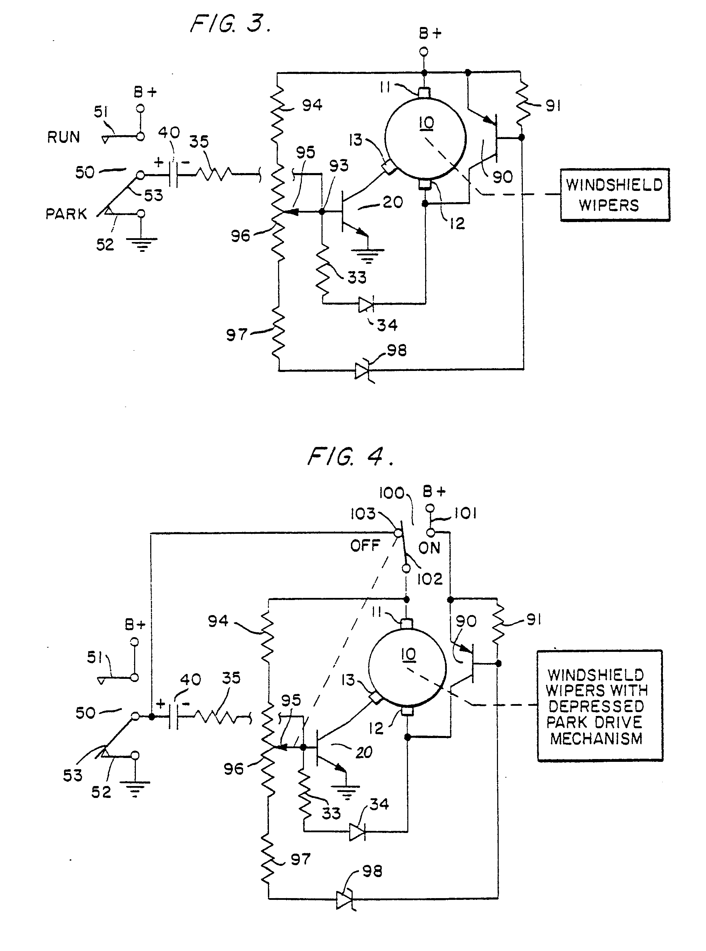

The intermittent windshield wiper system shown in in Fig. 3 employs a three brush permanent magnet motor 10 to drive the windshield wiper system like that of Fig. 1, but also employs electrodynamic braking like the system of Fig. 2. The components in the system of Fig. 3, which correspond to the components of Fig. 1, have been given the same reference numbers and the components of Fig. 3, which correspond to components of the system of Fig. 2, have been given the same reference numbers as in Fig. 2. In the system of Fig. 3, the energization of the motor 10 is between brushes 13 and 11 as controlled by a transistor 20 connected in circuit with resistor 33 and diode 34 in the same manner as described above with reference to Fig. 1. The base of the transistor 20 is connected through the series circuit of capacitor 40 and resistor 35 to the pole 53 of the motor driven switch 50 in the same manner as in the circuits of both Figs. 1 and 2. The electrodynamic braking transistor 90 has its emitter connected to the brush 11 and its collector connected to the brush 12. The base of the transistor 90 is connected through a resistor 91 to the brush 11 and through a zener diode 98 and a resistor 97 to one side of potentiometer 96. The other side of the potentiometer 96 is connected through a resistor 94 to the brush 11. The movable contact 95 of the potentiometer 96 is connected to a junction 93 which is connected to the base of transistor 20.

The dwell time constant of the system of Fig. 3 is determined by the total resistance of the portion of the resistance of the potentiometer 96 between the wiper 95 and the resistance 94 plus the value of resistance 94. The degree of braking depends upon the value of the resistance between the wiper 95 and resistor 97 plus the value of resistor 97 for a given Zener breakdown voltage. The value of the Zener breakdown voltage exceeds the +B potential as in the circuit of Fig. 2. The summing junction potential at junction 93 goes negative with respect to ground potential as the motor 10 enters the θ region and the pole 53 engages the contact 52. In this circuit, as the time constant of the dwell period is made shorter, the degree of braking becomes less. As the time constant of the dwell period is made longer, the degree of braking becomes larger. The value of resistance 35 exceeds the value of resistance 94 sufficiently such that when the wiper 95 is moved to the upper end of the potentiometer resistance, the base junction 93 will remain positive throughout the θ region particularly and throughout the cycle generally so that the motor is energized to operate at high speed with low torque capabilities. At an intermediate position of the wiper 95 on the potentiometer resistance 96, the transition to continuous operation occurs without the transistor 90 braking the motor. Resistor 91 is of sufficiently low value that transistor 90 does not leak above acceptable limits throughout the operating temperature range.

With the wiper 95 at the lower end of the potentiometer resistance, the brake is strong and the dwell time tends to be a maximum. As the wiper moves continuously away from the lower end, the brake becomes continuously less strong and the dwell period less long. At the transition point, the dwell becomes truly zero and the brake action does not occur at all. During these events, the wiper rotation speed has been gradually and continuously increasing. Beyond the transition point, the motor and wiper speed continues to increase to nearly the maximum capability of the motor for the given torque load.

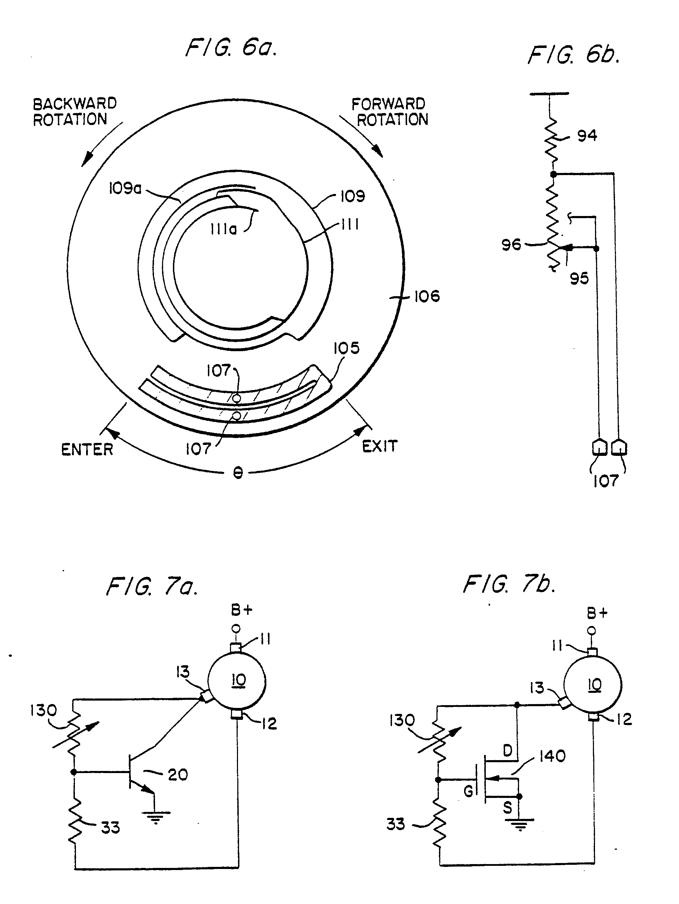

The intermittent windshield wiper system shown in Fig. 4 is like that shown in Fig. 3, but with an off/on control switch 102 connected with the circuit in a way to continue energization of the motor when the switch is placed in the OFF position until the motor gets to the θ region and then to energize the motor in a reverse direction to drive the windshield wipers to a depressed park position. When the switch 100 is the ON position wherein the movable pole 102 engages the contact 101, B+ will be applied to the brush 11 and the circuit shown will operate exactly in the same manner as the circuit of Fig. 3. The components of the system of Fig. 4 corresponding to those of Fig. 3 have been given the same reference numbers. When the switch 100 is moved to the OFF position so that the pole 102 engages the contact 103 in the middle of a wipe cycle, the motor 10 will remain energized by the connection from B+ through the contact 51, the pole 53 of the motor-driven switch 50 and the pole 102 of the on/off switch 100 to the brush 11 of the motor 10, the brush 13 being connected to ground through the conducting transistor 20. When the wipers reach the θ region and the pole 53 is disengaged from the contact 51 and engages the contact 52, the motor 10 will be energized in the reverse direction by ground being applied to the brush 11 through the pole 102 of the switch 100 and the energization of the braking transistor 90, in effect, connecting B+ at contact 101 to the brush 12. When the motor 10 is energized in the reverse direction in the θ region, the motor will drive the wiper blades to the depressed park position by a conventional depressed park mechanism. When the wiper blades reach the depressed park position, a camming mechanism, described below in connection with Fig. 6, will disengage the contact 53 from the contact 52 deenergizing the motor and causing the wiper blades to stop in the depressed park position. There is no need to brake the motor electrodynamically because the conventional mechanism used to drive the wiper blades to the depressed park position is a worm gear drive which serves as a dynamic mechanical brake to insure stopping in the depressed park position. Even without a worm gear drive, the motor will stop promptly in the depressed park position because of the depressed park load and the fact that the motor will not have had sufficient time nor movement to possess much kinetic energy.

Upon next placing the switch 100 in the ON position, the motor starts normally with the motor-driven switch pole 53 open circuited. The motor continues to drive the wiper blades from the depressed park position and into and through the θ region while the camming arrangement shown in Fig. 6 and explained below maintains all of the contacts of the motor driven switch 50 disengaged. When the wiper blades move past the θ region in the commencement of a wipe cycle, the pole 53 of the motor-driven switch 50 will engage the contact 51. The motor then completes the first wipe cycle and parks the blades on the glass at the normal dwell position with the expected dwell time and the process will then repeat as already described.

The control will complete the last cycle in progress regardless of where within the cycle the blades are located when the switch 100 is placed in the OFF position. During this last cycle, the capacitor 40 is again fully charged before the motor is reversed. Under this condition, the motor reverse driving current is a maximum. Naturally, the motor reverse drive occurs even if the last cycle was in the highest speed continuous mode of operation.

In designing the device for some vehicles, it may be desirable to interlock the ON/OFF switch with a particular location of the wiper 95.

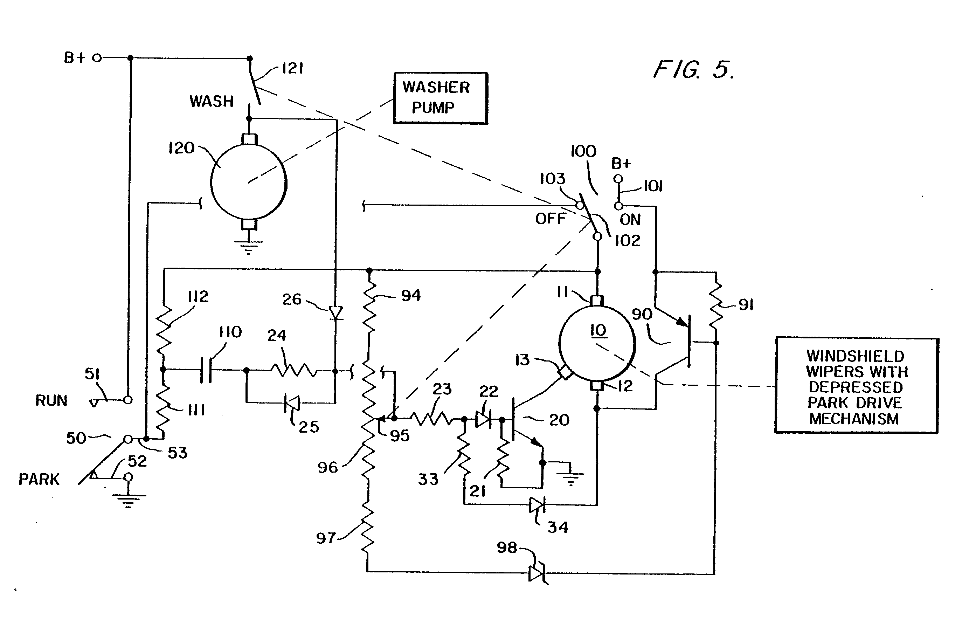

The intermittent windshield wiper system illustrated in Fig. 5 is like that of Fig. 4, but modified to operate in conjunction with a windshield washing system. In addition, the circuit is modified to provide instant start when the switch 100 is first turned to the ON position. In the circuit of Fig. 5, corresponding components have been given the same reference numbers. In the circuit of Fig. 5, the wiper 95 of the potentiometer 96, instead of being directly connected to the base of the transistor 20, is connected to the base through a series circuit of a resistor 23 and a diode 22. The resistor 33 is connected to the junction between the resistor 23 and the diode 22 instead of being directly connected to the base. In addition, a resistor 21 has been added to directly connect the base of the transistor 20 to ground. A voltage divider comprising a series circuit of resistors 111 and 112 connects the brush 11 of the motor to the pole 53 of the motor-driven switch 50. A capacitor 110 and a resistor 24 are connected in series from the junction between the resistors 111 and 112 to the wiper of the potentiometer 96 to provide the RC timing for the circuit. A washer motor 120 is connected to drive a washer pump arranged to squirt washer fluid on the windshield when the washer motor 120 is energized. One side of the washer motor is connected to ground and the other side is connected through a wash switch 121 to B+ supply. The ungrounded side of the wash motor 120 is also connected through a diode 26 to the wiper 95 of the potentiometer 96. A diode 25 is connected in shunt with the resistor 24. The diodes 26 and 25 are poled to permit charging of the capacitor 110 through these diodes when the washer switch 121 is closed. The wash switch 121 is operated by a push button and is closed and remains closed for only as long as the wash button is depressed. The wash switch is interlocked with the off/on switch 100 so that whenever the off/on switch is off and the wash switch 121 is closed, the action of closing the wash switch 121 will move the switch 100 from the off position to the on position. When the wash button is released opening the switch 121, the switch 100 will remain in the ON position.

In the system of Fig. 5, when the switch 100 is placed in the ON position, the voltage at the junction of resistors 111 and 112 rises abruptly. Since the capacitor 110 cannot change its charge instantaneously, the opposite capacitor plate rises the same and current flows through resistor 24, resistor 23, diode 22 into the base of transistor 20. This is in addition to the current flowing through resistor 94 and the potentiometer 96. This additional surge plus a shunt path across capacitor 110 when the switch 100 is in its OFF position, assures an instant start. As in the system of Fig. 4, the park switch pole 53 is open from both RUN contact 51 and PARK contact 52 at startup and remains open from the depressed park position, through the θ region of the first cycle. Thus, an instant start is further assured. The device of Fig. 5 is designed so during intermittent operation, the voltage at the junction between capacitor 110 and resistor 24 does not go negative with respect to ground below two diode drops. Otherwise, neutralizing current would flow into the capacitor 110 through the wash motor 12 from ground. Diode 22 protects the base of transistor 20 against excessive reverse base emitter voltages. Resistor 21 has a sufficiently low value of resistance so that transistor 20 does not leak above a specified value throughout the temperature operating range. Whenever the wash switch 121 is closed, the washer motor 120 will be energized and operate the washer pump and spray mechanism to squirt cleaning fluid on the windshield. When the wiper of the potentiometer is positoned so that the system is operating in a continuous mode and the wash switch 121 is closed, the potential at the wiper 95 will be nearly +B so the wiper speed approaches the maximum rate. If the wiper 95 is positioned so that the system is operating in the intermittent mode when the wash switch is closed, the wiper speed will approach the same maximum rate. When the pole 53 of the motor driven switch 50 engages the contact 52 in the dwell position, charging current will flow through diode 26, diode 25 into capacitor 110 through resistor 111 to ground. When the pole 53 engages the contact 51 (during a wipe cycle), the potential at the junction between resistors 111 and 112 jumps. The potential at the junction between capacitor 110 and resistor 24 jumps a similar amount and the capacitor 110 tends to discharge through resistor 24 to near +B potential. But the charging rate is much faster than the discharging rate so in each cycle, the charge on the capacitor 110 increases. The charge on capacitor 110 will maintain a base current flow in the transistor 20 through resistance 24 and resistor 23 for at least one cycle after the wash switch is no longer engaged. Thus, intermittent operation becomes high speed continuous so the windshield is cleaned as quickly as possible while the wash switch is closed and remains in continuous operation for at least one cycle after the wash switch is opened. When the switch 100 is in the OFF position, and the wash button is depressed to close the switch 121, the interlock with the switch 100 will move the switch 100 to the ON position, and the system will operate in the same manner as described above with the switch 100 in the ON position. It is necessary for the switch 100 to be returned to the OFF position manually to turn the system off and return the blades to the depressed and/or off the glass park position following closure of the switch 121.

The system of Figs. 4 and 5 can be modified to provide moisture variable dwell time, as shown in Figs. 6a and 6b, by means of a resistance film 105 mounted so as to rotate with the output gear 106 of the motor 10, which gear makes one 360 degree rotation for each wipe cycle.

The resistance film 105 is shaped to lie along two adjacent concentric, arcuate paths on the output gear 106 and are joined together at one end. The two arcuate arms of the thin film resistor 105 are engaged by brushes 107 whenever the wiper blades are in the θ region. The arcuate length of the resistor 105 thus corresponds to the angular position of the θ region with the respect to the brushes 107. One of the brushes 107 is connected to the wiper 95 of the potentiometer 96, as shown in Fig. 6b, and the other brush 107 is connected to the junction between the potentiometer 96 and the resistor 94. Thus, the thin film resistor 105 shunts the portion of the potentiometer 96 between the wiper 95 and the junction of the potentiometer with the resistor 94. Since, in the system of Figs. 4 and 5, the dwell time depends upon the value of the resistance 24, the resistance 94 and the resistance between the wiper arm 95 and the upper end of the potentiometer, the dwell period will depend upon the resistance of the thin film resistor 105 between the brushes 107, which, in turn, depends upon the final resting position of the wiper blades in the θ region. The further the wiper blades slide into the θ region in a wipe cycle, the closer the brushes 107 will come to the end where they are joined together and the smaller will be the value of the shunt resistance provided by the thin film resistor 105 in the circuit. When the amount of rainfall is light, the brushes 107 will only slide a relatively small distance into the θ region before the motor stops and the dwell period, accordingly, will be long. When the rainfall is heavier the resistance of the wiper blades on the glass will be less and the wiper blades will slide further into the θ region making the value of the resistance provided by the film resistor 105 less and reducing the time of the dwell period. When rain becomes relatively heavy, the brushes 107 will slide far enough to make the resistance small enough to cause the dwell period to be skipped entirely.

The systems of Figs. 1, 2 and 3 may be modified in a similar manner to provide a dwell period which is variable in accordance with moisture conditions.

The camming mechanism for positioning the contacts of the motor driven switch for the systems of Figs. 4 and 5 is shown in Fig. 6a. The pole 53 of the motor-driven switch 50 is flexible and is positioned by a guide riding in a groove 109 in the output gear 106 of the motor 10, as shown in Fig. 6a. The park contact 52 is also flexible and is positioned by a guide riding in a groove 111 in the output gear 106. Both the flexible pole 53 and the park contact 52 are mechanically biased to press inwardly toward the center of rotation of the output gear shown in Fig. 6a. During continuous and intermittent operation, while the motor is moving forward, the groove 111 is shaped to maintain the guide for the contact 52 in the outer portion of the groove 111. Similarly, the groove 109 is shaped to maintain the guide for the pole 53 in the outer portion of the groove 109. In the θ region, the pole 53 will be moved by the groove 109 to engage the contact 52 and, outside the θ region, the contact 53 will be moved to engage the contact 51 by the groove 109, while the motor is moving in the forward direction.

When the instrument control panel switch 100 is placed in the OFF position, the wipers continue to move forward completing the last cycle. After entering the θ region, the flexible pole 53 touches the flexible PARK contact 52 and the motor reverses direction as has been described.

Since the flexible contact 53 is biased toward the center of rotation, upon the motor reversing rotation, the contact 53 will follow the inner part 109a of the groove 109. The pole 53 will continue to engage the contact 52 for approximately 180 degrees. During this 180° reverse rotation, the depressed park mechanism in the wiper linkage operates to move the wiper blades to a depressed park position, which may be off the windshield. After the about 180° of reverse rotation, the contact 52, due to the inward radial bias, is guided into the inner part 111a of the groove 111. As contact 52 is guided into the inner part 111a of the groove 111, the contact 52 is disengaged from the pole 53, thereby de-energizing the motor and circuit. Since the wiper blades have only turned a half rotation in reverse and are experiencing a high load torque, the small energy of the system is rapidly dissipated and the blades come to rest with little further rotation since the entire system is de-energized.

Upon the next occasion that the instrument panel control switch 100 is placed in the ON position, the circuit is energized, the motor rotates in the forward direction. Due to the inward radial bias, contact 52 is guided to remain in the inner part of groove 111 until the motor has moved through and past the θ region. The flexible PARK contact 52 thus remains disengaged from the flexible pole 53 during the first 180° of forward rotation until the wiper blades exit from the θ region of the first cycle. At this point, the flexible pole 53 touches the stationary RUN contact 51, and the operation continues as has already been described.

The advantages of the invention can be better understood by considering the operation of the systems of Fig. 4 or Fig. 5 under three conditions:
1) Constant potentiometer wiper, 95, position with changing weather conditions,
2) Constant weather conditions with a change in the potentiometer wiper 95 position, and
3) The wiper blades have become older, harder, and worn.

Assume the road surface is wet, the windshield is dry, and, while the vehicle is approaching a truck, but still far enough behind it, that the windshield remains dry. The potentiometer wiper 95, is located such that the dwell time is approximately 15 seconds between one second wiper cycles. The kinetic energy of the system is dissipated in work done by the blades sliding a short distance into the θ region plus the energy consumed in the controlled brake. During each wiping cycle movement, the film resistance 105 is open circuited so the system kinetic energy, upon entering the θ region, depends upon the position of the potentiometer wiper 95. As the truck is approached, the spray increases so the value of the film resistance 105 in the circuit during the dwell periods becomes less. The less the value of the film resistance becomes, the less negative the summing junction potential at the wiper 95 will become and the less the braking will be, and the shorter will be the dwell time. When the vehicle gets to the truck preparing to pass, the spray will be dense, the sliding film resistance value in the circuit will be quite low at the stopping point in the θ region, no brake will be applied, and the wipers will operate continuously. After passing the truck, the sliding film resistance value will again be high, the degree of braking will be high, and the dwell time will return to 15 seconds in a few cycles. Thus, when the windshield is dry, the weather conditions effect on the windshield are sampled every 15 seconds. As the slipperiness of the windshield increases, the condition of the windshield is sampled more frequently. As the vehicle gets in position to pass the truck, the condition of the windshield is sampled every second. Thus, the sampling rate changes in the desired direction.

Now, assume the dwell time is 7 seconds with a one second wipe cycle, but the driver feels his vision is too obscured. He moves potentiometer wiper 95 further toward resistor 94 sufficiently to increase the wiper speed 5 percent. The amount of moisture accumulated in the sample is reduced 5 percent during the upstroke, but upon entering the θ region, the kinetic energy is increased 10 percent. The wipers slide further into the θ region, raising the summing junction voltage which decreases the amount of braking and reduces the dwell time to 4 seconds, for example. The driver's objective has been acheived.

Now assume the wiper blades have become older, harder, worn blades. The main effect of this aging and wearing will be less friction coefficient between the blades and the windshield. Accordingly, the blades will slide further into the θ region and a shorter dwell time will be the result. By moving potentiometer wiper 95 toward the resistor 97, the speed of the wipers will be reduced, the moisture sampled increased, the kinetic energy decreased and the braking increased to compensate for the aged and worn condition of the brakes.

The same potentiometer wiper 95 adjustment compensates for variations in the +B voltage, speed torque characteristic variations in the motor, component tolerances, and friction in the linkages. The intermittent windshield wiper systems of Figs. 1, 3, 4 and 5 energize the motor with a circuit which maintains the speed of the motor constant during the downstroke for varying torques utilizing the three brushes of the motor to achieve the constant speed characteristic. Fig. 7a is a simplified circuit diagram of an improved speed regulation current to achieve the constant speed characteristic. As shown in Fig. 7a, driving current flows from brush 11 through the armature windings to brush 13 with the majority of the current flowing through transistor 20 to ground. A small portion flows from brush 13 through potentiometer 130, from which an even lesser amount flows into the base of transistor 20 to ground. The remainder of the current from potentiometer 130 flows through resistor 33 and brush 12 into the motor armature where the motor EMF, produced by the armature rotation in the presence of the magnetic field, raises the potential of this current to brush 13, from which it flows through the transistor 20 to ground. The ratio of the value of the resistance of potentiometer 130 to the value of resistor 33 and the properties of the motor establishes a preset speed for the motor. If the torque load on the motor should increase tending to cause a decrease in speed, the potential at brush 13 will rise and the potential at brush 12 will rise nearly an equal amount. The base voltage of the transistor will remain at about .7 volts. Accordingly, more current will flow through potentiometer 130 than before while less current will flow through resistor 33. Thus, base current is increased from two feedback loops (1) from the increased current flow through potentiometer 130, and (2) due to the decreased current flow through resistor 33. After the transient conditions become stable, the voltage generated between brushes 13 and 12 will again dominate the control of current into the base of transistor 20. This voltage is less affected by ir drop than is the voltage between brushes 11 and 13 and is a better measure of the motor speed. Should the torque load the suddenly decreased, the motor speed will tend to increase, decreasing the potential at brush 13 and further deceasing (causing to be more negative) the potential at brush 12. Base current will be decreased from the two feedback loops. Less current flows through potentiometer 130 decreasing the base current, while more current flows through resistor 33 further depriving transistor 20 of base current.

Fig. 7b shows a speed control circuit similar to that of Fig. 7a with field effect transistor 140 replacing the transistor 20. There are two advantages of the use of a field-effect transistor over a transistor. A transistor has a lower limit on how close the voltage at brush 13 can approach ground. For a transistor, this voltage is around one volt ($V_{CE(sat.)}$=1 V.). ALso, current flows into the base. In a MOSFET (metaloxide semiconductor field-effect transistor), the conducting path is that of a resistor whose value depends upon the channel width. By paralleling MOSFETs, any channel width and, hence, any value of low resistance is possible. A MOSFET maufactured by General Electric of Schenectady, New York, which has a maximum current capability of 30 amperes, has an $R_{ON}$ value of 0.008 ohms. Thus, the voltage at brush 13 can approach within 1/4 volt of ground. In a typical windshield wiper motor, the maximum current is 8 amperes, so the voltage at brush 13 could approach 1/16 volt in that application. The second advantage is that the gate (base) operates on voltages (no current flows into the gate). Thus, very high gains within the MOSFET can be achieved so the least change in speed will be corrected by the circuit.

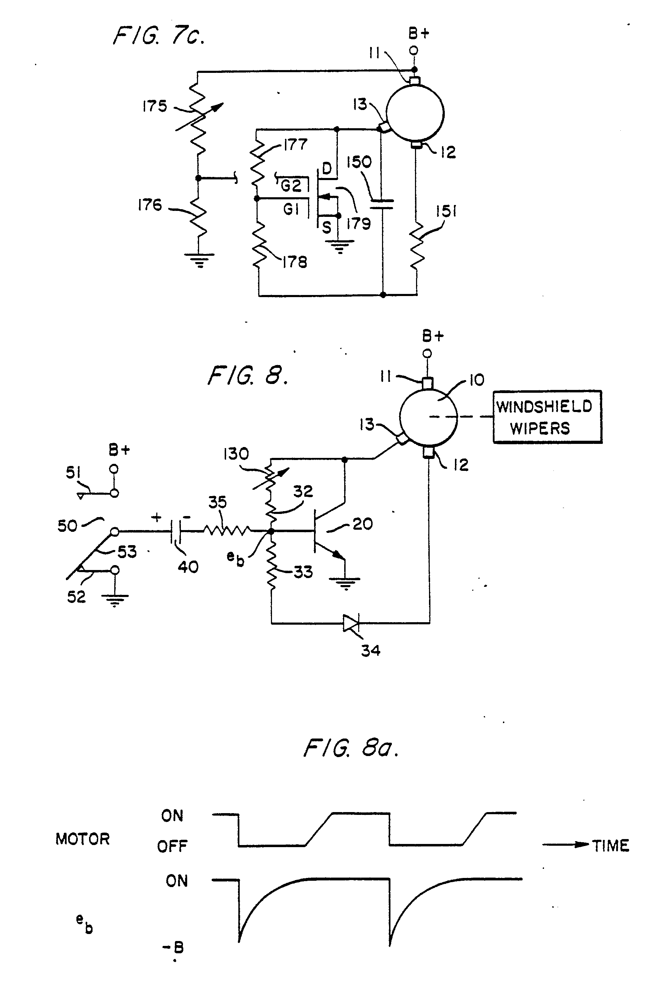

Fig. 7c shows a modification of the speed control circuit of Fig. 7b in which a dual gate enhancement field effect transistor 179 has been substituted for the field effect transistor 140 and a filter circuit comprising a capacitor 150 and resistor 151 have been added. In the circuit of Fig. 7c, the brush 11 is connected to ground through a variable resistor 175 and resistor 176 connected in series and the junction between the variable resistor 175 and the resistor 176 is connected to a gate G2 of the field effect transistor 179 to establish a coarse operating FET current. The brush 13 is connected to the drain of the transistor 179 and the source thereof is connected to ground. The brush 13 is also connected through a resistor 177 to the gate G1 of the transistor 179, which, in turn, is connected by the series circuit of transistors 178 and 151 to the brush 12 of the motor 10. The brush 13 is connected through the capacitor 150 to the junction between the resistor 178 and the resistor 151.

The voltage waveform at brush 12 of the circuit of Fig. 7c is not pure DC. Rather, it is DC with a pulsing AC superimposed Thus, filtering is desirable. It is important that the filter present to the gate of the FET a measure of the average. The purpose of resistor 151 is to slow the charging of filter capacitor 150 due to the AC pulsing. If the capacitor should charge in accordance with the pulse magnitude, the speed signal would be lost, because the pulse amplitude tends to be the same value at all speeds. By returning the other side of the filter capacitor to brush 13, the filter output is made a better representation of the voltage output being generated between brushes 13 and 12.

Field-effect transistors are assigned their name because the current flow in them is controlled by varying the effectric field which is brought about through the application of a voltage that controls the electrode known as the gate. The field-effect transistor used in the circuit of Fig. 7c is a dual gate enhancement mode field-effect transistor (FET). Enhancement mode FETs are those which have no current flow with zero gate voltage. Variable resistance 175 with resistor 176 establishes a potential on gate G2, which establishes a coarse operating FET current, while the potential at gate G1 depends upon the motor dynamics as previously described, to provide control of variations in motor speed about that operating current.

In the embodiment of Fig. 8, the speed control of Fig. 7a is used in an intermittent circuit similar to Fig. 1. In the circuit of Fig. 8, the speed control circuit of Fig. 7a has been connected to the three brush motor 10 in the same manner as in Fig. 7a with a diode 34 connected in series with the resistor 33 to permit current flow from the base of the transistor to the brush 12 and with a resistor 32 connected in series with the variable resistor 130. In addition, to make the circuit intermittent, the base of the transistor 20 is connected by a series circuit of resistor 35 and a capacitor 40 to the pole 53 of the motor-driven switch 50 having contacts 51 and 52 connected to B+ and ground in the same manner as the motor-driven switch 50 in the circuit of Fig. 1. In this embodiment, a different result is obtained in that after the dwell, the system starts "softly" compared to prior art systems, such as disclosed in the applicant's prior U.S. patent No, 3,351,836. In the system of the applicant's prior patent, the transistor switches to full ON rapidly and the transistor is in saturation driving the motor with full torque. As stated above, windshield wiper systems are notoriously noisy. They include many individual linkage members which are loosely coupled. When such a system coast to a stop, the loose couplings tend to separate. Upon conducting full saturation current in the motor windings, full torque capability occurs which accelerates first the motor, then each part in turn as the play is removed. Further, the members currently being driven accelerate while another loose coupling is traversed and then the assembly smashes into the next component where this system now accelerates through the next loose coupling and smashes into the next member. The result is a noisy "hard" start.

Fig. 8a shows waveforms produced by the system of Fig. 1 as the system operates through successive wipe cycles. The lower waveform illustrates the waveform produced at the base of the transistor 20 and the upper waveform illustrates the waveform produced at the collector of the transistor 20 or, in other words, at the brush 13. As the base voltage of the transistor 20 rises through ground and becomes positive, there is a tendency for the collector voltage to switch on as in the system of the 3,351,826 patent. But, as the collector voltage drops, the current through potentiometer 130 will decrease, which tends to turn the transistor 20 off. The result is that base equalibrium must be re-established during startup so that the motor starts gradually or "softly". In a "soft" start, the voltage across the armature is increased over finite time with a controlled rate of increase such that the backlash between system components are closed consecutively and slowly relative to prior art systems and with much less sound noise. As shown in Fig. 8a, the motor experiences a sudden de-energization upon entry into the θ region, where the components glide to a stop. At the end of the dwell period, the voltage across the armature has a slope and increases at a controlled rate to achieve the above described result.

In the intermittent system described above, it should be noted that both the circuitry and the motor are effectively de-energized at the start of a dwell period. Changing the kinetic energy of the system into work on the windshield done by the wiper occurs under these de-energized conditions. In the systems with dwell periods varying with the amount of moisture, the value of sliding resistance plus a fully charged capacitor determines the dwell period. In these systems, the dwell period depends upon the preceding wiping cycle experience. Also, in the above described intermittent system, the charging of the capacitior overrides the speed control during the upstroke of the wipers. This action does not interfere with the establishment of a uniform kinetic energy upon entering the θ region at the bottom of the downstroke.

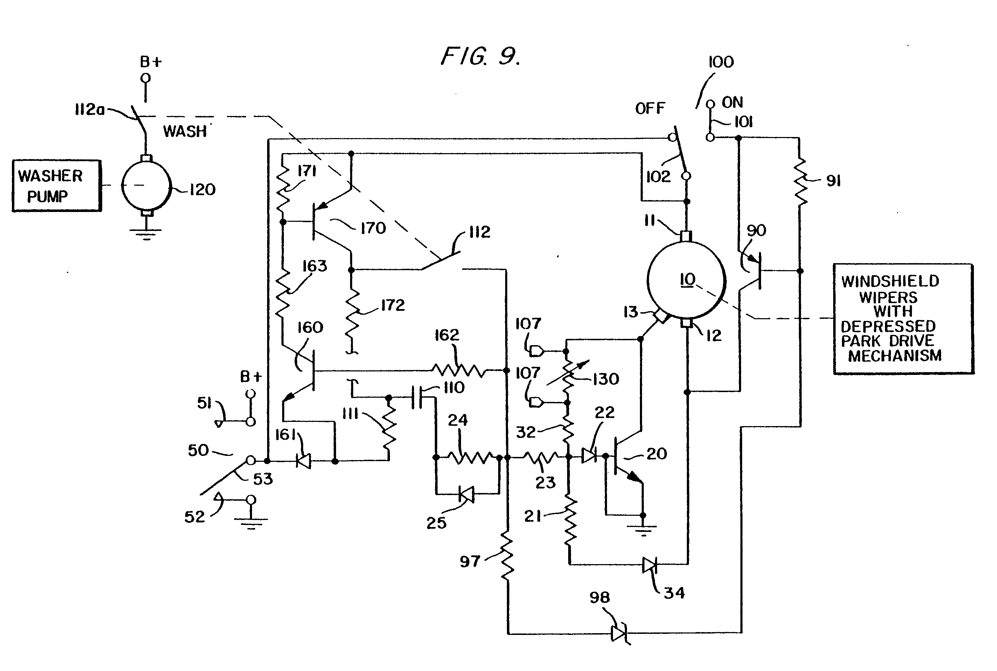

The system of Fig. 9 achieves a more uniform wiping speed in both the upstroke and downstroke trajectories. The system also provides a "soft" start. The resistance in the RC circuit remains constant while the charge on the capac- tor varies with the degree of dryness of the windshield. The length of the dwell period is determined by the experience of the past wiping cycle. In this system, the capacitor is conditioned while exiting the θ region: if the glass was wet and the system slides far into the θ region, the amount of θ region to be traversed upon exiting is correspondingly small and since conditioning occurs upon exiting, the charge on the capacitor will be small and the next dwell period will be short; if the glass was dry and the system slides only a short distance into the θ region, the amount of θ region to be traversed during exiting is large, and the amount of conditioning will be large, the charge stored will be large and the next dwell period will be long. Since the timing capacitor is fully charged (to the desired degree, that is) and then is effectively open circuited, the base current into transistor 20 during the wiping cycle is not influenced by the charging of the timing capacitor.

The system of Fig. 9 is a modification of the system of Fig. 5 and the components in the system of Fig. 9 corresponding to those of Fig. 5 have been given the same reference numbers. In the system of Fig. 9, the potentiometer 96 and the resistor 94 have been eliminated and, instead, the junction between the resistor 23 and the diode 22 are connected through a series circuit of a resistor 32 and the variable resistor 130 to the brush 13. The resistor 97 is connected directly between the diode 98 and the junction between the resistors 23 and 24. The diode 26 and the resistor 112 of the system of Fig. 5 have been eliminated. Instead, the junction between the resistors 23 and 24 is connected through a switch 112 operated by the washer pushbutton to the collector of a transistor 170, the emitter of which is connected to the brush 11 of the motor 10 and the collector of which is connected through the resistor 172 to the junction between the resistor 111 and the capacitor 110. The brush 11 of the motor 10 is also connected through a resistor 171 to the base of the transistor 170, which is also connected through a resistor 163 to the collector of a transistor 160. The base of the transistor 160 is connected through a resistor 162 to the junction between resistors 23 and 24. A diode 161 is connected in series with the resistor 111 between the pole 53 of the motor-driven switch 50 and the capacitor 110. The emitter of the transistor 160 is connected to the junction between the diode 161 and the resistor 111. The washer system motor 120 is connected in a separate circuit in series with a switch 112a operated by the washer button between B+ and ground.

In the system of Fig. 9, the switch pole 53 contacts ground through contact 52 both during entrance and exiting from the θ region. However, the voltage at the junction of resistors 24 and 23 is negative upon entrance and positive upon exiting. Accordingly, transistor 160 and transistor 170 conduct when pole 53 is at ground potential and the junction between resistors 24 and 23 is positive. Upon exiting the θ region, timing capacitor

charging current enters capacitor 110 through resistor 172. Upon exiting the θ region, diode 161 and the base emitter junction of transistor 160 are back biased so that charging current is cut off except for leakage current through resistor 172. The leakage current is small enough compared to the charging current to have negligible effect on the time constant. During the wiping cycle, the motor speed is controlled as described in the circuit of Fig. 7a. Upon re-entering the θ region, the park switch pole 53 contacts ground and the leakage current through resistances 172 and 111 is sufficient for the diode 161 to conduct establishing .7 volts on the side of the capacitor 110 connected to resistor 111. The voltage at the junction of resistors 24 and 23 becomes negative for the dwell period. Neutralizing current flows through the motor brushes 11 and 13, through potentiometer 130, resistor 32, resistor 23, diode 25 into capacitor 110. As the charge becomes neutralized, the junction again becomes positive resulting in a "soft" start during which the capacitor 110 is again charged through resistance 172.

When the WASH switch is activated, current from transistor 170 is conducted to the side of capacitor 110 connected to resistor 24 and into the base of transistor 20. When the WASH switch is released, this reverse charge keeps the base of transistor 20 positive through at least the next dwell location so the wipers are in continuous operation after the wash motor is de-energized.

Upon placing switch 100 in the OFF position, the wiping cycle in progress is continued. At the park location, the armature current is reversed being conducted through transistor 90, brush 12, the motor, armature, brush 11, and contact 103, switch pole 53 to ground. Upon the wiper blades reaching the depressed park position, the pole 53 becomes open circuited de-energizing the circuit except for the base circuit of transistor 90. However, Zener diode 98 blocks base current flow so the entire circuit is effectively de-energized.

Since the moisture variable dwell time is dependent upon the amount of conditioning of capacitor 110 during exiting from the θ region, there is no need for a wiper position dependent variable resistance in the system of Fig. 9 and moisture sensitivity can be achieved without modifying the windshield wiper motor.

The system of Fig. 9 may employ a wiper dependent variable resistance in the RC timing circuit, in addition to conditioning the capacitor during exiting from the θ region, by using the thin film resistance 107 on the output gear of the motor as described above in connection with Fig. 6a. When the wiper dependent variable resistance is used with the system of Fig. 9, the brushes 107 are connected to the opposite sides of the variable resistance 130 so that the thin film resistance 107 varying with the degree of dryness of the windshield shunts the resistance 130. With this arrangement, the dwell period varies with the charge on the capacitor determined by the length of time the motor-driven switch 50 remains in the

θ region at the start of the preceding wipe cycle as well as upon the value provided by the thin film resistance 107 determined by how far the wiper blades slide into the θ region. Thus, the dwell period is determined in part by the dryness of the windshield at the end of the immediately preceding wipe cycle and, in part, by the dryness of the windshield at the end of the penultimate wiping cycle. By making the system depend upon the degree of dryness in two wipe cycles, the system is made less subject to erratic variation in the dwell period due to instantaneous variations in the windshield dryness. Yet, the system is, overall, made more sensitive to moisture conditions since it is changing both the charge on the capacitor and the resistance in the RC timing circuit in response to the degree of dryness of the windshield.

It is to be understood that the above detailed description of the present invention is intended to disclose embodiments thereof to those skilled in the art, but that the invention is not be be construed as limited in its application to the details of construction and arrangements of parts illustrated in the accompanying drawing. The language used in the specification relating to the operation and function of the elements of the invention is employed for purposes of description and not of limitation, and it is not intended to limit the scope of the following claims beyond the requirements of the prior art.

**Claims**

1. In an intermittent windshield wiper system comprising a motor (10) connected to drive a windshield wiper through repeating wiping cycles over a windshield, each wiping cycle including a start and an end, and amplifying device (20), switch means (53) driven by said motor having a RUN position and a DWELL position and moving to said DWELL position at the end of each wiping cycle, and circuit means responsive to said switch means including a charge storage device (40) to cause said amplifying device, which is responsive to the potential on one side of said storage device to initiate a wiping cycle at the end of each dwell period and to initiate the dwell periods at the end of each wiping cycle, characterized in that said circuit means includes speed regulating means (32, 33, 130, 34; 21) responsive to the speed of said motor (10) to apply a signal to the input of said amplifying device (20) to cause said amplifying device to energize said motor with continuous current controlled to regulate the speed of the said motor to be substantially uniform at least at the entrance of the dwell region (θ), so that the motor is continuously driven when the input of the amplifier is not influenced by the potential on this one side of the charge storing device or when the motor does not stop in the dwell periods depending on the above substantially uniform speed and the degree of dryness on said windshield.

2. In an intermittent windshield wiper system as recited in claim 1, wherein said charge storage device is a capacitance (40), said regulating means (32, 130, 34; 21) comprise adjustable means (130) adjusting the transition point from the intermittent motor operation to the continuous motor operation so that the dwell period between wiping cycles, varying with the degree of dryness, is adjustable.

3. In an intermittent windshield wiper system as recited in claim 1, wherein said switch means (53) remains in said dwell position for a region of travel of said motor (10) until after the start of the next wiping cycle and then switches to said run position, said circuit means varying the length of said dwell period in accordance with the length of time that said motor-driven switch remains in said dwell position after the start of the preceding wiping cycle.

4. In an intermittent windshield wiper system as recited in claim 1, wherein said motor is a three brush motor, said amplifying device (20) energizes the armature of said motor between a first brush (11) and third brush (13) of said motor (10), and said speed regulating means includes a first circuit (33, 34; 21) for applying a signal derived from a second brush (12) of said motor to the input of said amplifying device.

5. In an intermittent windshield wiper system as recited in claim 4, wherein said regulating means includes a second circuit (32, 130) connecting said amplifying device (20) to said third brush (13) for applying a signal derived from said third brush to the input of said amplifying device.

6. In an intermittent windshield wiper system as recited in claim 5, wherein said second circuit comprises a variable resistance (130) connected between said third brush (13) and the input of said amplifying device (20; 140) and serving as the adjustable means.

7. In an intermittent windshield wiper system as recited in claim 5, wherein said first circuit for applying a signal from said second brush comprises a resistance (33; 21) connected between the input of said amplifier (20) and said second brush (12).

8. In an intermittent windshield wiper system as recited in claim 6, wherein said circuit means includes manual control means to vary the speed at which said motor (10) is regulated at least at the entrance of the dwell region ($\theta$) of said wiping cycles to thereby vary the transition points.

9. In an intermittent windshield wiper system as recited in claim 1, wherein said circuit means causes said amplifier (20) to energize said motor gradually with a sloped waveform at the start of each wiping cycle.

10. In an intermittent windshield wiper system as recited in claim 1, wherein said circuit means includes manual control means (95; 130) operable over a continuous range to vary the length of said dwell period from a maximum value at one end of said range to zero dwell period intermediate the ends of said range with the speed of the motor being increased from the point of zero dwell period intermediate the ends of said range to the other end of said continuous range.

11. In an intermittent windshield wiper system as recited in claim 10, wherein said manual control means (95; 130) increases the speed of said motor (10) from one end of said range to the other end of said range.

12. In an intermittent windshield wiper system as recited in claim 1, wherein said circuit means causes said amplifier (20) to run at an unregulated speed during the start of said wiping cycles and said speed regulating means (31, 32, 33, 34) causes said amplifying device to energize said motor (10) with continuous current controlled to regulate said motor at at least the entrance to the dwell region ($\theta$) of said wiping cycle at a speed lower than the unregulated speed of said motor during the start of said cycle.

13. In an intermittent windshield wiper system as recited in claim 1, wherein a pump motor (120) is energized by washer control means (112) to apply fluid to said windshield when actuated, said circuit means including means to drive said wiper through a plurality of wiping cycles without a dwell period between wiping cycles in response to actuation of said washer control means, characterized by first circuit means (112, 25) responsive to actuation of said washer control means to change the charge on said capacitance (110) so that said amplifying device (20) will not initiate a dwell period at the end of at least the first wiping cycle following actuation of said washer control.

14. A windshield wiper system as recited in claim 13, wherein said first circuit means (112, 25) charges said capacitance (110) in response to actuation of said washer control means (112) in the reverse direction from that in which said capacitance is charged at the start of each dwell period.

15. A windshield wiper system as recited in claim 14, wherein said capacitance (110) discharges from the reverse charge condition of said capacitance to which said capacitance is charged in response to actuation of said washer control means (112) toward the forward charge condition of said capacitance during said wiping cycles, said amplifying device (20) initiating a dwell period at the end of the wipe cycle in which said capacitance switches from said reverse charge condition to said forward charge condition.

16. A windshield wiper system as recited in claim 13, wherein said amplfying device includes a transistor (20) which is rendered conductive and non-conductive in response to the voltage on said one side of said capacitance, said amplifying device initiating a dwell period in response to said transistor changing between said non-conductive and conductive states and initiating a wiping cycle in response to said transistor changing in the opposite direction between said non-conductive and conductive states.

17. A windshield wiper system as recited in claim 13, further comprising an on-off control (100) having an off position and an on position, said circuit means resuming driving said wiper intermittently following said plurality of wiping cycles when said on-off control is in said on position.

18. A windshield wiper system as recited in claim 13, including an off-on switch control (100) having an off position and an on position and second circuit means (111, 112) to change the potential on said one side of said capacitance to initiate a wiping cycle in response to said off-on control being switched to said on position.

19. In an intermittent windshield wiper system as recited in claim 1 or 13, wherein said circuit means includes a current path (90) connected across the armature of said motor, control means (97, 98) for closing said current path at the ends of successive wiping cycles to electrodynamically brake said motor to a stop at the ends of such successive wiping cycles and to open said switch means before the end of said dwell period, characterized by manual control means (102) having an ON position and an OFF position, said circuit means energizing said motor (10) to drive said wipers intermittently, stopping for dwell periods at the ends of successive wiping cycles when said manual control means is in said ON position, and driving the wiper means to complete a wiping cycle during which said manual control means is switched to said OFF position, and automatically reversing the direction of current through the electric motor at the end of the last wiping cycle to drive the wiper to a depressed park position, said manual control connecting said armature in series with said current path (90) connected to the speed regulating means (32, 33, 130, 34; 21) to cause current flow through said armature in the reverse direction at the end of the said last wiping cycle during which said manual control means is switched to said OFF position to drive said wiper to said depressed park position.

20. In an intermittent windshield wiper system as recited in claim 19, wherein said manual control means (102) connecting said switch means (53) in series with said current path (90) when said manual control means is in said OFF position and said switch means is in said dwell position, said switch means opening said current path when said wiper reaches said depressed park position.

21. In an intermittent windshield wiper system as recited in claim 20, wherein said switch means (53) has a movable pole (53) engaging a first contact (51) in said RUN position and engaging a second contact (52) in said DWELL position and engaging neither said first contact nor said second contact when said wiper reaches said depressed park position.

22. In an intermittent windshield wiper system as recited in claim 21, wherein said circuit means includes means to energize said motor (10) in the forward direction when said wiper is in said depressed park position in response to said manual control means (102) being moved to said ON position, said switch means maintaining said movable contact (53) disengaged from said first and second contacts (51, 52) when said motor is energized with said wiper in said depressed park position until said motor has driven said wiper from said depressed park position past the position of said wiper at the end of each wiping cycle.

23. In an intermittent windshield wiper system as recited in claim 1, wherein said amplifying device (20; 140; 179) comprises a field effect transistor the input electrode of which is controlled by said regulating means (32, 33, 130, 34; 21).

24. In an intermittent windshield wiper system as recited in claim 23, wherein said field-effect transistor (179) has a first gate (61) comprising said control electrode and has a second gate (62), and means (175, 176) to apply an independently variable signal to said second gate to provide a coarse control over the regulated speed of said motor.

25. In an intermittent windshield wiper system as recited in claim 1, wherein said circuit means causes the time of the dwell period between wiping cycles to vary in part in accordance with the degree of dryness of the windshield in the wiping cycle immediately preceding the dwell period and to vary in part in accordance with the degree of dryness of the windshield in the penultimate wiping cycle befoe the dwell period.

**Patentansprüche**

1. Intermittierend betriebenes Windschutzscheibenwischsystem, aufweisend einen Motor (10), der so angeschlossen ist, daß er einen Windschutzscheibenwischer durch sich wiederholende Wischzyklen über eine Windschutzscheibe antreibt, wobei jeder Wischzyklus einen Beginn und ein Ende einschließt, ferner eine Verstärkungsvorrichtung (20), eine durch den Motor betriebene Schaltvorrichtung (53), die eine Laufbetriebsstellung und eine Pausenstellung aufweist und die sich am Ende jedes Wischzyklusses in diese Pausenstellung bewegt, und ein Schaltungseinrichtung, die auf diese Schaltvorrichtung anspricht und eine Ladungsspeichervorrichtung (40) enthält, die diese Verstärkungsvorrichtung, welche auf das Potential auf einer Seite dieser Ladungsspeichervorrichtung anspricht, veranlaßt, am Ende jeder Pausenperiode einen Wischzyklus einzuleiten und am Ende jedes Wischzyklusses die Pausenperioden einzuleiten, dadurch gekennzeichnet, daß diese Schaltungseinrichtung eine auf die Geschwindigkeit dieses Motors (10) ansprechende Geschwindigkeitsregelvorrichtung (32, 33, 130, 34; 21) aufweist, die dem Eingang dieser Verstärkungsvorrichtung (20) ein Signal zuführt, welches diese Verstärkungsvorrichtung dazu veranlaßt, diesen Motor mit einem kontinuierlichen Strom zu versorgen, welcher so gesteuert wird, daß die Motorgeschwindigkeit so geregelt wird, daß sie zumindest am Eintritt in den Pausenbereich (θ) im wesentlichen gleichförmig ist, so daß der Motor kontinuierlich angesteuert wird, wenn das Eingangssignal des Verstärkers nicht durch das Potential auf dieser einen Seite der Ladungsspeichervorrichtung beeinflußt wird, oder wenn der Motor in Abhängigkeit von der obigen im wesentlichen gleichförmigen Geschwindigkeit und vom Grad der Trockenheit auf dieser Windschutzscheibe in den Pausenperioden nicht anhält.

2. Intermittierend betriebenes Windschutzschiebenwischsystem nach Anspruch 1, in welchem diese Ladungsspeichervorrichtung eine Kapazität (40) ist, und diese Regelvorrichtung (32, 130, 34; 21) eine einstellbare Vorrichtung (130) aufweist, die den Übergangspunkt aus dem intermittierenden Motorbetrieb in den kontinuierlichen Motorbetrieb derart einstellt, daß die Pausenperiode zwischen. Wischzyklen, die mit dem Grad der Trockenheit variiert, einstellbar ist.

3. Intermittierend betriebenes Windschutzscheibenwischsystem nach Anspruch 1, in welchem diese Schaltvorrichtung (53) für einen Laufbereich dieses Motors (10) bis nach dem Beginn des nächsten Wischzyklusses in dieser Pausenstellung verbleibt und daraufhin in diese Laufbetriebsstellung schaltet, wobei diese Schaltvorrichtung die Länge dieser Pausenperiode in Übereinstimmung mit der Zeitdauer, die dieser motorbetriebene Schalter nach dem Beginn des vorhergehenden Wischzyklusses in dieser Pausenstellung verbleibt, variiert.

4. Intermittierend betriebenes Windschutzscheinbenwischsystem nach Anspruch 1, in welchem dieser Motor ein Dreibürstenmotor ist, diese Verstärkungsvorrichtung (20) den Anker des Motors zwischen einer ersten Bürste (11) und dritten Bürste (13) dieses Motors (10) erregt, und diese Geschwindigkeitsregelvorrichtung eine erste Schaltung (33, 34; 21) enthält, die dem Eingang dieser Verstärkungsvorrichtung ein Signal zuführt, das von einer zweiten Bürste (12) dieses Motors abgeleitet wird.

5. Intermittierend betriebenes Windschutzscheibenwischsystem nach Ansrpuch 4, in welchem diese Regelvorrichtung eine zweite Schaltung (32, 130) aufweist, fie diese Verstärkungsvorrichtung (20) mit dieser dritten Bürste (13) verbindet, um ein von dieser dritten Bürste abgeleitetes Signal dem Eingang dieser Verstärkungsvorrichtung zuzuführen.

6. Intermittierend betriebenes Windschutzscheibenwischsystem nach Anspruch 5, in welchem diese zweite Schaltung einen zwischen diese dritte Bürste (13) und den Eingang dieser Verstärkungsvorrichtung (20; 140) geschalteten variablen Widerstand (130) aufweist, der als die einstellbare Vorrichtung dient.

7. Intermittierend betriebenes Windschutzscheinbenwischsystem nach Anspruch 5, in welchem diese erste Schaltung, die ein Signal von dieser zweiten Bürste zuführt, einen Widerstand (33; 21) aufweist, der zwischen den Eingang dieses Verstärkers (20) und diese zweite Bürste (12) geschaltet ist.

8. Intermittierend betriebenes Windschutzscheibenwischsystem nach Anspruch 6, in welchem diese Schaltungseinrichtung eine manuelle Steuereinrichtung enthält, um die Geschwindigkeit zu variieren, auf die dieser Motor (10) zumindest beim Eintritt in diesen Pausenbereich (θ) dieser Wischzyklen geregelt wird, um auf diese Weise die Übergangspunkte zu variieren.

9. Intermittierend betriebenes Windschutzscheibenwischsystem nach Anspruch 1, in welchem diese Schaltungseinrichtung diesen Verstärker (20) dazu veranlaßt, zu Beginn jedes Wischzyklusses diesen Motor graduierlich einem geneigten Funktionsverlauf folgend anzusteuern.

10. Intermittierend betriebenes Windschutzscheibenwischsystem nach Anspruch 1, in welchem diese Schaltungseinrichtung eine manuelle Steuereinrichtung (95; 130) aufweist, die über einen kontinuierlichen Bereich betätigbar ist, um die Länge dieser Pausenperiode von einem Maximalwert an einem Ende dieses Bereiches auf eine Pausen-Nullperiode zwischen den Enden dieses Bereiches zu variieren, wobei die Geschwindigkeit des Motors vom Punkt der Pausen-Nullperiode zwischen den Enden dieses Bereiches zum anderen Ende dieses kontinuierlichen Bereiches hin erhöht wird.

11. Intermittierend betriebenes Windschutzscheinbenwischsystem nach Anspruch 10, in welchem diese manuele Steuereinrichtung (95; 130) die Geschwindigkeit des Motors (10) von einem Ende dieses Bereiches zum anderen Ende dieses Bereiches hin erhöht.

12. Intermittierend betriebenes Windschutzscheibenwischsystem nach Anspruch 1, in welchem diese Schaltungseinrichtung diesen Verstärker (20) dazu veranlaßt, während des Beginns dieser Wischzyklen auf einer nicht geregelten Geschwindigkeit zu arbeiten, und diese Geschwindigkeitsregelvorrichtung (31, 32, 33, 34) diese Verstärkungsvorrichtung dazu veranlaßt, diesen Motor (10) mit kontinuierlichem Strom zu versorgen, der so gesteuert wird, daß dieser Motor zumindest beim Eintritt in den Pausenbereich (θ) dieses Wischzyklusses auf eine Geschwindigkeit geregelt wird, die geringer als die nicht geregelte Geschwindigkeit dieses Motors während des Beginns dieses Zyklusses ist.

13. Intermittierend betriebenes Windschutzscheinbenwischsystem nach Anspruch 1, in welchem ein Pumpenmotor (120) durch eine Waschsteuervorrichtung (112) dazu erregt wird, bei Betätigung der Windschutzscheibe Flüssigkeit zuzuführen, wobei diese Schaltungseinrichtung Vorrichtungen enthält, die ansprechend auf die Ingangsetzung dieser Waschsteuervorrichtung diesen Wischer durch eine Vielzahl von Wischzyklen ohne Pausenperioden zwischen diesen Wischzyklen steuert, gekennzeichnet durch eine erste Schaltungseinrichtung (112, 25), die auf die Ingangsetzung dieser Waschsteuervorrichtung so anspricht, daß sie die Ladung auf dieser Kapazität (110) derart ändert, daß diese Verstärkungsvorrichtung (20) am Ende von zumindest des ersten Wischzyklusses, der der Ingangsetzung dieser Waschsteuervorrichtung folgt, keine Pausenperiode einleitet.

14. Windschutzscheibenwischsystem nach Anspruch 13, in welchem diese erste Schaltungseinrichtung (112, 25) diese Kapazität (110) ansprechende auf die Ingangesetzung dieser Waschsteuervorrichtung (112) in der Richtung auflädt, die umgekehrt zu der Richtung ist, in welcher die Kapazität zu Beginn jeder Pausenperiode aufgeladen wird.

15. Windschutzscheibenwischsystem nach Anspruch 14, in welchem diese Kapazität (110) während dieser Wischzyklen aus diesem Zustand umgekehrter Ladung der Kapazität, auf den diese Kapazität in Abhängigkeit von der Betätigung dieser Waschsteuervorrichtung (112) geladen wird, zum Vorwärts-Ladezustand dieser Kapazität hin entlädt, wobei diese Verstärkungsvorrichtung (20) am Ende des Wischzyklusses, in welchem diese Kapazität aus dem Zustand umgekehrter Ladung in diesen Vorwärts-Ladezustand schaltet, eine Pausenperiode einleitet.

16. Windschutzscheibenwischsystem nach Anspruch 13, in welchem diese Verstärkungsvorrichtung einen Transistor (20) aufweist, der ansprechend auf die Spannung auf dieser einen Seite dieser Kapazität leitend und nichtleitend gemacht wird, wobei diese Verstärkungsvorrichtung ansprechend darauf, daß dieser Transistor zwischen diesem nichtleitenden in einen leitenden Zustand wechselt, eine Pausenperiode einleitet und ansprechend darauf, daß dieser Transistor in der umgekehrten Richtung zwischen diesem nichtleitenden und leitenden Zustand wechselt, einen Wischzyklus einleitet.

17. Windschutzscheibenwischsystem nach Anspruch 13, welches ferner eine Ein/Aus-Steuerung (100) aufweist, die eine Aus-Stellung und eine Ein-Stellung aufweist, wobei diese Schaltungseinrichtung auf diese Vielzahl von Wischzyklen folgend eine intermittierende Ansteuerung dieses Wischers wieder aufnimmt, wenn diese Ein/Aus-Steuerung sich in dieser Ein-Stellung befindet.

18. Windschutzscheibenwischsystem nach Anspruch 13, welches eine Ein/Aus-Schaltersteuerung (100) aufweist, die eine Aus-Stellung und eine Ein-Stellung und eine zweite Schaltungseinrichtung (111, 112) aufweist, die das Potential auf dieser einen Seite dieser Kapazität anaprechend darauf, daß diese Ein/Aus-Steuerung in diese Ein-Stellung geschaltet wird, dahingehend ändert, daß sie einen Wischzylus einleitet.

19. Intermittierend betriebenes Windschutzscheibenwischsystem nach Anspruch 1 oder Anspruch 13, in welchem diese Schaltungseinrichtung einen Strompfad (90) aufweist, der über den Anker dieses Motors gelegt ist, eine Steuereinrichtung (97, 98), die diesen Strompfad jeweils an den Enden von aufeinanderfolgenden Wischzyklen schließt, um diesen Motor an den Enden derartiger aufeinanderfolgender Wischzyklen elektrodynamisch zum Stillstand abzubremsen und um diese Schaltvorrichtung vor dem Ende dieser Pausenperiode zu öffnen, gekennzeichnet durch eine manuelle Steuereinrichtung (102) mit einer Ein-Stellung und einer Aus-Stellung, wobei diese Schaltungseinrichtung diesen Motor (10) dazu erregt, diese Wischer intermittierend anzutreiben, an den Enden aufeinanderfolgender Wischzyklen, wenn sich diese manuelle Steuervorrichtung in dieser Ein-Stellung befindet, für Pausenperioden anzuhalten, und die Wischeinrichtung so anzusteuern, daß diese einen Wischzyklus beendet, währenddessen diese manuelle Steuereinrichtung in diese Aus-Stellung geschaltet wird, und zudem am Ende das letzten Wischzyklusses die Richtung des Stromes durch den Elektromotor automatisch umkehrt, um den Wischer in eine abgesenkte Parkstellung zu steuern, und wobei diese manuelle Steuerung diesen Anker in Serie mit diesem Strompfad (90) verbindet, welcher an die Geschwindigkeitsregelvorrichtung (32, 33, 130, 34; 21) angeschlossen ist, um am Ende von diesem letzten Wischzyklus, während welchem diese manuelle Steuereinrichtung in diese Aus-Stellung geschaltet ist, einen Stromfluß durch diesen Anker in der umgekehrten Richtung zu bewirken, um diesen Wischer in diese abgesenkte Parkstellung zu steuern.

20. Intermittierend betriebenes Windschutzscheibenwischystem nach Anspruch 19, in welchem diese manuelle Steuereinrichtung (102) diese Schaltvorrichtung (53) in Serie mit diesem Strompfad (90) schaltet, wenn diese manuelle Steuereinrichtung sich in der Aus-Stellung befindet und diese Schaltvorrichtung sich in dieser Pausenstellung befindet, wobei diese Schaltvorrichtung diesen Strompfad öffnet, wenn dieser Wischer die abgesenkte Parkstellung erreicht.

21. Inermittierend betriebenes Windschutzscheibenwischsystem nach Anspruch 20, in welchem diese Schaltvorrichtung einen bewegbaren Pol (53) aufweist, der in dieser Laufbetriebsstellung einen ersten Kontakt (51) kontaktiert und in dieser Pausenstellung einen zweiten Kontakt (52) kontaktiert, und ferner weder diesen ersten noch diesen zweiten Kontakt kontaktiert, wenn dieser Wischer diese abgesenkte Parkstellung erreicht.

22. Intermittierend betriebenes Windschutzscheinben wischsystem nach Anspruch 21, in welchem diese Schaltungseinrichtung Vorrichtungen enthält, die ansprechend darauf, daß diese manuelle Steuereinrichtung (102) in diese Ein-Stellung gebracht wird, diesen Motor (10) in Vorwärtsrichtung steuern, wenn sich dieser Wischer in dieser abgesenkten Parkstellung befindet, wobei diese Schaltvorrichtung diesen bewegbaren Kontakt (53) außer Kontakt mit diesem ersten und zweiten Kontakt (51, 52) hält, wenn dieser Motor bei sich in dieser abgesenkten Parkstellung befindendem Wischer angetrieben wird, so lange bis dieser Motor diesen Wischer aus dieser abgesenkten Parkstellung über die Stellung des Wischers am Ende jedes Wischzyklusses hinaus gesteuert hat.

23. Intermittierend betriebenes Windschutzscheibenwischsystem nach Anspruch 1, in welchem diese Verstärkungsvorrichtung (20; 140; 179) einen Feldeffekttransistor aufweist, dessen Eingangselektrode durch diese Regelvorrichtung (32, 33, 130, 34; 21) gesteuert wird.

24. Intermittierend betriebenes Windschutzscheibenwischsystem nach Anspruch 22, in welchem dieser Feldeffekttransistor (179) ein erstes Gate (61), das diese Steuerelektrode aufweist, und ein zweites Gate (62) aufweist sowie Vorrichtungen (175, 176), um diesem zweiten Gate ein unabhängig variierbares Signal zuzuführen, welches über die geregelte Geschwindigkeit des Motors eine Grobsteuerung liefert.

25. Intermittierend betriebenes Windschutzscheibenwischsystem nach Anspruch 1, in welchem diese Schaltungseinrichtung veralaßt, daß die Zeitdauer der Pausenperiode zwischen Wischzyklen teilweise in Übereinstimmung mit dem Grad der Trockenheit auf der Windschutzscheibe während des Wischzyklusses, der der Pausenperiode unmittelbar vorhergeht, variiert wird und teilweise in Übereinstimmung mit dem Grad der Trockenheit der Windschutzscheibe während des vorletzten Wischzyklusses vor dieser Pausenperiode variiert wird.

## Revendications

1. Système d'essuie-glace intermittent pour parebrise, comprenant un moteur (10) connecté pour entraîner un essuieglace de pare-brise en le faisant passer par des cycles répétitifs d'essuyage sur un pare-brise, chaque cycle d'essuyage comprenant un début et une fin, un dispositif amplificateur (20), un dispositif commutateur (53) commandé par ce moteur et ayant une position de FONCTIONNEMENT en une position de REPOS et se déplaçant vers cette position de REPOS à la fin de chaque cycle d'essuyage, et un dispositif à circuit sensible au dispositif commutateur et comprenant un dispositif d'accumulation de charge (40) pour amener le dispositif amplificateur, qui est sensible au potentiel existant d'un côté du dispositif d'accumulation, à amorcer un cycle d'essuyage à la fin de chaque période de repos et à amorcer les périodes de repos à la fin de chaque cycle d'essuyage, caractérisé en ce que le dispositif à circuit comprend un dispositif régulateur de vitesse (32, 33, 130, 34; 21) sensible à la vitesse du moteur susdit (10) pour appliquer un signal à l'entrée du dispositif amplificateur (20) afin d'amener ce dernier dispositif à exciter le moteur par un courant continu contrôlé pour régler la vitesse de ce moteur afin qu'elle soit sensiblement uniforme au moins un début de la période de repos (θ), de sorte qui le moteur est entraîné de façon continue lorsque l'entrée de l'amplificateur n'est pas influencée par le potentiel existant du côté susdit du dispositif d'accumulation de charge ou lorsque le moteur ne s'arrête pas au cours des périodes de repos suivant la vitesse sensiblement uniforme susdite et le degré de sécheresse existant sur le pare-brise.

2. Système d'essuie-glace inermittent pour pare-brise suivant la revendicaiton 1, dans lequel le dispositif d'accumulation de charge est un condensateur (40), le dispositif régulateur susdit (32, 130, 34; 21) comprend un dispositif réglable (130) ajustant le point de transition entre le fonctionnement intermittent du moteur et le fonctionnement continu de celui-ci, de sorte que la période de repos entre les cycles d'essuyage, variant avec le degré de sécheresse, est réglable.

3. Système d'essuie-glace intermittent pour pare-brise suivant la revendication 1, dans lequel le dispositif commutateur (53) reste dans la position de repos susdite pendant une zone de déplacement du moteur (10) jusqu'après le début du cycle suivant d'essuyage et se déplace ensuit vers la position de fonctionnement, le dispositif à circuit faisant varier la longueur de la péiode de repos suivant la durée de la période pendant laquelle le commutateur susdit entraîné par le moteur reste dans cette position de repos après le début du cycle précédent d'essuyage.

4. Systéme d'essuie-glace intermittent pour pare-brise suivant la revendicaiton 1, dans lequel le moteur susdit est un moteur à trois balais, le dispositif amplificateur (20) excitant l'induit de ce moteur entre un premier balai (11) et un troisième balai (13) de ce moteur (10), et le dispositif régulateur de vitesse comprend un premier circuit (33, 34; 21) destiné à appliquer un signal provenant d'un second balai (12) du moteur à l'entrée du dispositif amplificateur susdit.

5. Système d'essuie-glace intermittent pour pare-brise suivant la revendication 1, dans lequel le dispositif régulateur comprend un second circuit (32, 130) reliant le dispositif amplificateur (20) au troisième balai (13) pour appliquer un signal provenant de ce troisème balai à l'entrée du dispositif amplificateur.

6. Système d'essuie-glace intermittent pour pare-brise suivant la revendication 5, dans lequel le second circuit susdit comprend une résistance variable (130) reliée entre le troisième balai (13) et l'entrée du dispositif amplificateur (20; 140) et servant de dispositif réglable.

7. Système d'essuie-glace intermittent pour pare-brise suivant la revendication 5, dans lequel le premier circuit susdit destiné à appliquer un signal provenant du second balai comprend une résistance (33; 21) reliée entre l'entrée de l'amplificateur (20) et le second balai (12).

8. Système d'essuie-glace intermittent pour pare-brise suivant la revendication 6, dans lequel le dispositif à circuit comprend un dispositif de commande manuelle permettant de faire varier la vitesse à laquelle le moteur (10) est réglée au moins au début de la zone de repos (θ) des cycles d'essuyage pour faire varier ainsi les points de transition.

9. Système d'essuie-glace intermittent pour pare-brise suivant la revendication 1, dans lequel le dispositif à circuit amène l'amplificateur (20) à exciter le moteur graduellement par une forme d'onde en pente au début de chaque cycle d'essuyage.

10. Système d'essuie-glace intermittent pour pare-brise suivant la revendication 1, dans lequel le dispositif à circuit comprend un dispositif de commande manuelle (95; 130) pouvant être amené à opérer sur un intervalle continu pour faire varier la durée de la période de repos depuis une valeur maximale à une extrémité de cet intervalle jusqu'à une période de repos nulle, intermédiaire aux extrémités de cet intervalle, la vitesse du moteur étant augmentée depuis le point de période de repos nulle intermédiaire aux extrémités de cet intervalle, jusqu'à l'autre extrémité de cet intervalle continu.

11. Système d'essuie-glace intermittent pour pare-brise suivant la revendication 10, dans lequel le dispositif de commande manuelle (95; 130) augmente la vitesse du moteur (10) depuis une extrémité de l'intervalle susdit jusqu'à l'autre extrémité de celui-ci.

12. Système d'essuie-glace intermittent pour pare-brise suivant la revendication 1, dans lequel le dispositif à circuit amène l'amplificateur (20) à opérer à une vitesse non réglée durant le début des cycles d'essuyage, et le dispositif régulateur de vitesse (31, 32, 33, 34) amène ce dispositif amplificateur à exciter le moteur (10) par un courant continu contrôlé pour régler ce moteur, au moins au début de la zone de repos (θ) du cycle d'essuyage, à une vitesse inférieure à la vitesse non réglée du moteur durant le début de ce cycle.

13. Systéme d'essuie-glace intermittent pour pare-brise suivant la revendication 1, dans lequel un moteur de pompe (120) est excité par un dispositif de commande de lave-glace (112) pour envoyer un liquide au pare-brise lorsqu'il est actionné, le dispositif à circuit susdit comprenant des moyens pour commander l'essuie-glace en vue de la faire passer par une série de cycles d'essuyage sans période de repos entre ceux-ci en réponse à l'actionnement de ce dispositif de commande de lave-glace, caractérisé en ce qu'il comprend un premier dispositif à circuit (112, 25) sensible à un actionnement du dispositif de commande de lave-glace pour modifier la charge sur la condensateur (110) de sorte que le dispositif amplificateur (20) n'amorcera pas une période de repos à la fin d'au moins de premier cycle d'essuyage suivant l'actionnement de ce dispositif de commande de lave-glace.

14. Systéme d'essuie-glkce pour pare-brise suivant la revendication 13, dans lequel le premier dispositif à circuit (112, 25) charge le condensateur (110) en réponse à l'actionnement du dispositif de commande de lave-glace (112) dans le sens inverse de celui suivant lequel le condensateur est chargé au début de chaque période de repos.

15. Systéme d'essuie-glace pour pare-brise suivant la revendication 14, dans lequel le condensateur (110) se décharge depuis l'état de charge inverse auquel ce condensateur est chargé en réponse à l'actionnement du dispositif de commande de lave-glace (112) vers l'état de charge avant de ce condensateur durant les cycles d'essuyage, le dispositif amplificateur (20) amorçant une période de repos à la fin du cycle d'essuyage au cours duquel le condensateur passe de l'étant de charge inverse à l'état de charge avant.

16. Système d'essuie-glace pour pare-brise suivant la revendication 13, dans lequel le dispositif amplificateur comprend un transistor (20) qui est rendu conducteur et non conducteur en réponse à la tension existant du côté susdit du condensateur, le dispositif amplificateur amorçant une période de repos en réponse au changement du transistor entre l'état non conducteur et l'état conducteur et amorçant un cycle d'essuyage en réponse au changement du tranistor dans le sens opposé entre non conducteur et l'état conducteur.

17. Système d'essuie-glace pour pare-brise suivant la revendication 13, comprenant en outre une commande marche-arrêt (100) comportant une position d'arrêt et une position de marche, le dispositif à circuit reprenant l'entraînement de l'essuie-glace de manière intermittente après la série susdite de cycles d'essuyage lorsque la commande march-arrêt se trouve dans la position de marche.

18. Système d'essuie-glace pour pare-brise suivant la revendication 13, comprenant une commande de commutation marche-arrêt (100) comportant une position d'arrêt et une position de marche, et un second dispositif à circuit (111, 112) destiné à modifier le potentiel existant du côté susdit du condensateur pour amorcer un cycle d'essuyage en réponse à la commutation de la commande marche-arrêt sur la position de marche.

19. Système d'essuie-glace intermittent pour pare-brise suivant la revendication 1 ou 13, dans lequel le dispositif à circuit comprend un trajet de courant (90) relié aux bornes de l'induit du moteur, un dispositif de commande (97, 98) destiné à fermer ce parcours de courant aux termes des cycles successifs d'essuyage pour freiner électodynamiquement le moteur jusqu'à l'arrêt aux termes de ces cycles successifs d'essuyage et pour ouvrir le dispositif commutateur avant la fin de la période de repos, caractérisé en ce qu'il comprend un dispositif de commande manuelle (102) présentant une position de marche et une position d'arrêt, le dispositif à circuit excitant le moteur (10) pour entraîner les essuie-glaces de façon intermittente avec un arrêe pendant des périodes de repos aux termes des cycles successifs d'essuyage lorsque le dispostif de commande manuelle se trouve dans la position de marche, et avec entraînement de l'essuie-glace pour terminer un cycle d'essuyage durant lequel le dispositif de commande manuelle est commuté à la position d'arrêt, et avec inversion automatique du sens du courant à travers le moteur électrique à la fin du dernier cycle d'essuyage pour entraîner l'essuie-glace vers une position de stationnement, la commande manuelle susdite connectant l'induit en série aevc le parcours de courant (90) relié au dispositif régulateur de vitesse (32, 33, 130, 34; 21) pour provoquer un débit de courant à travers l'induit susdit en sens inverse à la fin du dernier cycle d'essuyage durant lequel le dispositif de commande manuelle est commuté vers la position d'arrêt pour amener l'essuie-glace à la position de stationnement susdite.

20. Système d'essuie-glace intermittent pour pare-brise suivant la revendication 19, dans lequel le dispositif de commande manuelle (102) relie le dispositif commutateur (53) en série avec le parcours de courant (90) lorsque ce dispositif de commande manuelle est dans la position d'arrêt et que le dispositif commutateur est dans la position de repos, le dispositif commutateur susdit ouvrant ce parcours de courant lorsque l'essuie-glace atteint la position de stationnement susdite.

21. Système d'essuie-glace intermittent pour pare-brise suivant la revendication 20, dans lequel le dispositif commutateur (53) comporte un pôle mobile (53) coopérant avec un premier contact (51) dans la position de FONCTIONNEMENT et coopérant avec un second contact (52) dans la position de REPOS, et ne coopérant ni avec le premier contact ni avec le second lorsque l'essuie-glace atteint la position de stationnement susdite.

22. Système d'essuie-glace intermittent pour pare-brise suivant la revendication 21, dans lequel le dispositif à circuit susdit comprend des moyens pour exciter le moteur (10) dans le sens avant lorsque l'essuie-glace est dans la position de stationnement précitée en réponse au déplacement du dispositif de commande manuelle (102) vers la position de marche, ce dispositif commutateur maintenant ce contact mobile (53) dégagé du premier et du second contact (51, 52) lorsque le moteur est excité tandis que l'essuie-glace se touve dans la position de stationnement, jusqu'à ce que ce moteur ait entraîné cet essuie-glace depuis la position de stationnement susdite au-delà de la position de cet essuie-glace à la fin de chaque cycle d'essuyage.

23. Système d'essuie-glace intermittent pour pare-brise suivant la revendiation 1, dans lequel le dispositif amplificateur (20; 140; 179) comprend un transistor à effet de champ dont l'électrode d'entrée est commandée par le dispositif régulateur susdit (32, 33, 130, 34; 21).

24. Système d'essuie-glace intermittent pour pare-brise suivant la revendication 23, dans lequel le transistor à effet de champ (179) comporte une première porte (61) comprenant l'électrode susdite de commande et une second porte (62), des moyens (175, 176) étant prévus pour appliquer un signal variable indépendamment à cette second porte pour assurer un contrôle grossier sur la vitesse réglée du moteur.

25. Système d'essuie-glace intermittent pour pare-bise suivant la revendication 1, dans lequel le dispositif à circuit susdit amène la durée de la période de repos entre les cycles d'essuyage à varier en partie suivant le degré de sécheresse du pare-brise dans le cycle d'essuyage précédant immédiatement la période de repos, et à varier en partie suivant le degré de sécheresse du pare-brise au cours du pénultième cycle d'essuyage avant la période de repos.

**0 113 341**

FIG. 1.

FIG. 2.

FIG. 2a.

FIG. 3.

FIG. 4.

FIG. 5.

## FIG. 6a.

BACKWARD
ROTATION

FORWARD
ROTATION

109a

111a

109

111

106

107

105

ENTER

107

EXIT

θ

## FIG. 6b.

94

96

95

107

## FIG. 7a.

B+

11

13

10

130

12

20

33

## FIG. 7b.

B+

11

13

10

130

12

D

140

G

S

33

4

FIG. 7c.

B+
11

175

177
150
13
12

G2
176
G1
179
178
S
151

FIG. 8.

B+
11
10

13
WINDSHIELD
WIPERS

B+
51
130
12

50
35
32
20

53
+ −
40
$e_b$
33

52
34

FIG. 8a.

MOTOR

ON

OFF

TIME

ON

$e_b$

−B

FIG. 9.

WASHER PUMP

B+

WINDSHIELD WIPERS WITH DEPRESSED PARK DRIVE MECHANISM

0 113 341